# EUROPEAN PATENT SPECIFICATION

(11) **EP 4 005 755 B1**
(45) Date of publication and mention of the grant of the patent: **07.06.2023**
(21) Application number: 21156171.7
(22) Date of filing: 10.02.2021
(51) Int. Cl.: B26D 1/00, G01N 1/06

(54) **NOVEL HARD TISSUE SLICING KNIFE**
NEUARTIGES MESSER ZUM SCHNEIDEN VON HARTEM GEWEBE
NOUVEAU COUTEAU À TRANCHER DE TISSUS DURS

(30) Priority: 30.11.2020 CN 202011374995
(43) Date of publication of application: 01.06.2022
(73) Proprietor: Shanghai Sixth People's Hospital, Shanghai 200233 (CN)
(72) Inventor: ZHANG, Changqing, Shanghai 200233 (CN); YIN, Junhui, Shanghai 200233 (CN)
(74) Representative: Cabinet Chaillot

(56) References cited:
- WO-A1-2018/129934
- WO-A1-2019/166767
- DE-A1- 3 906 026
- US-A1- 2020 023 420

## Description

### BACKGROUND OF THE INVENTION

### 1. Field of the Invention

The invention relates to the field of medical research equipments for tissue slices, and more particularly, to a novel hard tissue slicing knife.

### 2. Description of the Related Art

In modern orthopedics, stomatology and other medical research, undecalcified hard tissues, such as bones, teeth, plastics and resins, can be cut into slices by a hard tissue slicing device; the tissue slices are then stained, and other related medical research activities are carried out. All of those activities facilitate the histological morphology in the medical field. The commonly used hard tissue slicing knife is generally the Leica^{®} D-type tungsten steel knife made from Germany. The tungsten steel knife has high harness and poor toughness. The knife edge is easily cracked when in use, and it has to be replaced with a new knife after the old one is cracked. It is such a great waste and may delay the progress of experimental research activities. In addition, since the edge of the tungsten steel knife is easy to break, and the angle of the knife edge is relatively large, the tissue slice has a thickness in a range of about 7-20 µm. However, the thickness of slices needed in actual research activities is often less than 5 µm, so as to make progress in bone morphology research. While in some tests, the thickness should be in a range of 2 µm to 50 µm for carrying out some special experiments. Therefore, there is a need for a hard tissue slicing knife, which has high toughness so that the knife edge is not easy to crack, and which has a thickness less than 5 µm or greater than 20 µm.

Prior art document WO 2019/166767 A1 discloses a hard tissue slicing knife, comprising a knife back portion and a knife edge portion which are manufactured as a single piece.

### SUMMARY OF THE INVENTION

Given that the foregoing problems exist in the prior art, the present invention provides a hard tissue slicing knife, which has high toughness so that the knife edge is not easy to crack, and which has a more precision thickness.

The present invention provides the following technical solution for solving the technical problems:
the invention provides a novel hard tissue slicing knife, comprising a knife back portion and a knife edge portion which are manufactured as a single piece; wherein the knife back portion has a cross section of an isosceles trapezoid, the knife edge portion has a cross section of an isosceles triangle; an end of the knife back portion, which is away from the knife edge portion, has a thickness in a range of 4 mm to 15 mm;
a junction between the knife back portion and the knife edge portion has a thickness in a range of 0.1 mm to 0.8 mm;
the knife back portion has a vertical height in a range of 27 mm to 38 mm;
two faces of the knife edge portion is at an angle in a range of 10 degrees to 40 degrees; and
a base angle of the isosceles triangle is in a range of 70 degrees to 85 degrees.

By using the novel hard tissue slicing knife provided in the present invention, the thickness of the hard tissue slices can be limited in a range of 2µm to 50 µm. By reducing or increasing the angle between the two faces of the knife edge portion, the thickness of the hard tissue slices cut by the slicing knife is less than 5 µm or greater than 20 µm. The length and the thickness of the knife back portion and the knife edge portion are determined, and the angle between two faces of the knife edge portion and an upper end of the knife back portion is determined. The slicing knife, as a whole, is made from white steel. As is known, the white steel has high toughness, so that the slicing knife is not easy to crack. The slicing knife has a more stable shape since it is manufactured as a single piece, making it more economic and practical.

Furthermore, a lower base angle of the isosceles trapezoid is in a range of 70 degrees to 85 degrees and is greater than the angle of the base angle of the isosceles triangle.

Furthermore, the knife back portion and the knife edge portion each has a horizontal length in a range of 8 cm to 20 cm.

Furthermore, an end of the knife back portion, which is away from the knife edge portion, has a thickness in a range of 4 mm to 12 mm.

Furthermore, the knife edge portion has a vertical height in a range of 1 mm to 3.5 mm.

Furthermore, both the knife back portion and the knife edge portion are made from white steel.

The present invention has the beneficial effects that the angle of two faces of the knife edge portion is reduced, so that a hard tissue slice cut by the slicing knife has a thickness less than 5 µm and the thickness thereof is more precise, meeting the need for the research in bone morphology. The slicing knife is made from white steel, and the length and thickness of the knife back portion and the knife edge portion are determined, and the angle between two faces of the knife edge portion and an upper end of the knife back portion is determined, so that the slicing knife has a more stable shape as a whole. In doing so, sufficient hardness of the knife is guaranteed; and the toughness is higher, which in turn makes the knife edge not easy to crack, thus the possibility of replacement of the broken knife edge is also reduced, and costs for the replacement are reduced.

### BRIEF DESCRIPTION OF THE DRAWINGS

The accompanying drawings, together with the specification, illustrate exemplary embodiments of the present disclosure, and, together with the description, serve to explain the principles of the present invention.
Figure 1 is a schematic view of a structure of a novel hard tissue slicing knife according to an embodiment of the present invention;
Figure 2 is a side cross-sectional view of a novel hard tissue slicing knife according to an embodiment of the present invention;
Figure 3 is an enlarged view of A in Figure 2;
Figure 4 is an enlarged view of B in Figure 2;
in the accompanying drawings, 1-knife edge portion; 2-knife back portion.

### DETAILED DESCRIPTION

The present invention provides a novel hard tissue slicing knife.

The technical solution of the present invention will now be described more fully hereinafter with reference to the accompanying drawings, so as to better understand the present invention. However, it should not limit the scope of the invention.

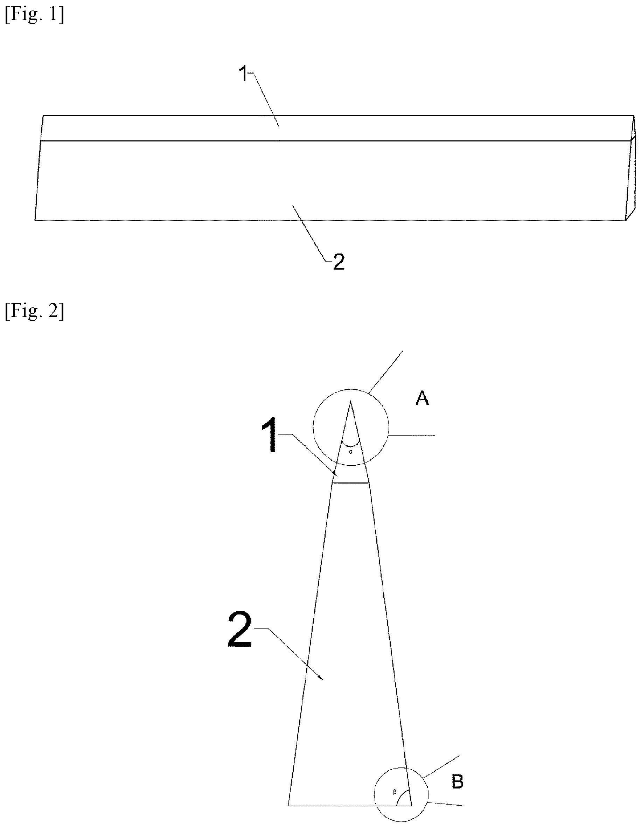

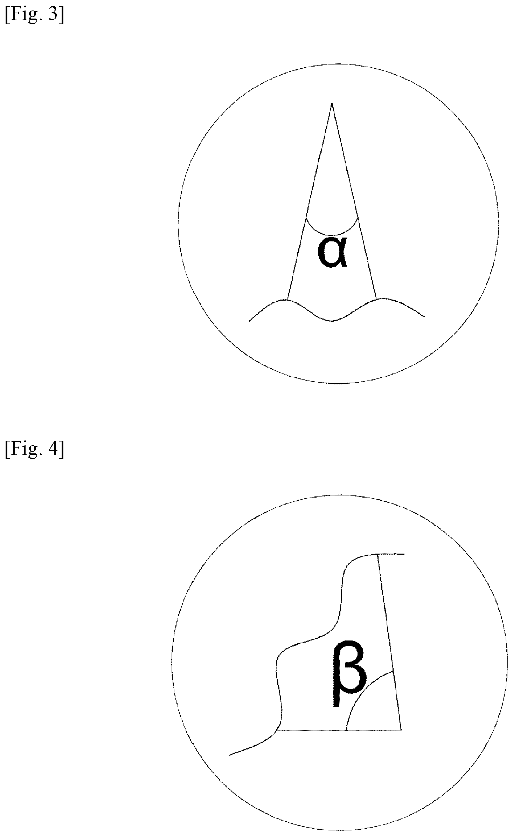

As shown in Figures 1-4, the present invention provides a novel hard tissue slicing knife, comprising a knife back portion 2 and a knife edge portion 1 which are manufactured as a single piece; wherein the knife back portion 2 has a cross section of an isosceles trapezoid, the knife edge portion 1 has a cross section of an isosceles triangle; an end of the knife back portion 2, which is away from the knife edge portion 1, has a thickness in a range of 4 mm to 15 mm;
a junction between the knife back portion 2 and the knife edge portion 1, has a thickness in a range of 0.1 mm to 0.8 mm; preferably in a range of 0.2 mm to 0.6 mm.
the knife back portion 2 has a vertical height in a range of 27 mm to 38 mm;
two faces of the knife edge portion 1 is at an angle α in a range of 10 degrees to 40 degrees; preferably in a range of 10 degrees to 30 degrees.
a base angle of the isosceles triangle is in a range of 70 degrees to 85 degrees; preferably in a range of 75 degrees to 85 degrees

A lower base angle of the isosceles trapezoid is in a range of 70 degrees to 85 degrees and is greater than the angle of the base angle of the isosceles triangle.

In a preferred embodiment of the present invention, the knife back portion 2 and the knife edge portion 1 each has a horizontal length in a range of 8 cm to 20 cm, preferably in a range of 12 cm to 18 cm.

In a preferred embodiment of the present invention, an end of the knife back portion 2, which is away from the knife edge portion 1, has a thickness in a range of 4 mm to 12 mm.

In a preferred embodiment of the present invention, the knife edge portion 1 has a vertical height in a range of 1 mm to 3.5 mm.

In a preferred embodiment of the present invention, both the knife back portion 2 and the knife edge portion 1 are made from white steel. Use of the white steel ensures the hardness of the slicing knife, and roughness is higher, so that the knife edge is not easy to crack.

For the novel hard tissue slicing knife provided in the present invention, the angle between two faces of the knife edge portion is reduced, so that tissue slices cut by the slicing knife have a thickness which is more precise, and the thickness is less than 5 µm or greater than 20 µm. Since the knife edge portion and the knife back portion are made from white steel, i.e., high-speed steel, hardness required for the slices are guaranteed, and the toughness of the slicing knife is relatively higher, which makes the knife edge not easy to crack in use; and the thickness and the width of the knife back portion and the knife edge portion are preset for slicing tissues in a more convenient way. The novel hard tissue slicing knife provided in the present invention is not easy to crack, so that costs for the replacement of the broken knife edges are reduced; in addition, the thickness of the tissue slices is more precise.

The above descriptions are only the preferred embodiments of the invention, not thus limiting the embodiments and scope of the invention. Those skilled in the art should be able to realize that the schemes obtained from the content of specification and drawings of the invention are within the scope of the invention as defined in the following claims.

## Claims

1. A novel hard tissue slicing knife, comprising a knife back portion (2) and a knife edge portion (1) which are manufactured as a single piece;
**characterized in that**:
the knife back portion (2) has a cross section of an isosceles trapezoid, the knife edge portion (1) has a cross section of an isosceles triangle; an end of the knife back portion (2), which is away from the knife edge portion (1), has a thickness in a range of 4 mm to 15 mm;
a junction between the knife back portion (2) and the knife edge portion (1) has a thickness in a range of 0.1 mm to 0.8 mm;
the knife back portion (2) has a vertical height in a range of 27 mm to 38 mm;
two faces of the knife edge portion (1) is at an angle in a range of 10 degrees to 40 degrees; and
a base angle of the isosceles triangle is in a range of 70 degrees to 85 degrees.

2. The hard tissue slicing knife of claim 1, wherein a lower base angle of the isosceles trapezoid is in a range of 70 degrees to 85 degrees and is greater than the angle of the base angle of the isosceles triangle.

3. The hard tissue slicing knife of claim 1, wherein the knife back portion (2) and the knife edge portion (1) each has a horizontal length in a range of 8 cm to 20 cm.

4. The hard tissue slicing knife of claim 1, wherein an end of the knife back portion (2), which is away from the knife edge portion (1), has a thickness in a range of 4 mm to 12 mm.

5. The hard tissue slicing knife of claim 1, wherein the knife edge portion (1) has a vertical height in a range of 1 mm to 3.5 mm.

6. The hard tissue slicing knife of claim 1, wherein both the knife back portion (2) and the knife edge portion (1) are made from white steel.

## Patentansprüche

1. - Neuartiges Messer zum Schneiden von hartem Gewebe, umfassend einen hinteren Abschnitt (2) des Messers und einen Kantenabschnitt (1) des Messers, die als ein einziges Stück hergestellt sind;
**dadurch gekennzeichnet, dass**:
der hintere Abschnitt (2) des Messers einen Querschnitt eines gleichschenkligen Trapezes aufweist, der Kantenabschnitt (1) des Messers einen Querschnitt eines gleichschenkligen Dreiecks aufweist; ein Ende des hinteren Abschnitts (2) des Messers, das vom Kantenabschnitt (1) des Messers entfernt ist, eine Dicke in einem Bereich von 4 mm bis 15 mm aufweist;
eine Verbindung zwischen dem hinteren Abschnitt des Messers (2) und dem Kantenabschnitt (1) des Messers eine Dicke in einem Bereich von 0,1 mm bis 0,8 mm aufweist;
der hintere Abschnitt (2) des Messers eine vertikale Höhe in einem Bereich von 27 mm bis 38 mm aufweist;
zwei Seiten des Kantenabschnitts (1) des Messers in einem Winkel in einem Bereich von 10 Grad bis 40 Grad sind; und
ein Basiswinkel des gleichschenkligen Dreiecks in einem Bereich von 70 Grad bis 85 Grad ist.

2. - Messer zum Schneiden von hartem Gewebe nach Anspruch 1, wobei ein unterer Basiswinkel des gleichschenkligen Trapezes in einem Bereich von 70 Grad bis 85 Grad ist und größer als der Winkel der Basis des gleichschenkligen Dreiecks ist.

3. - Messer zum Schneiden von hartem Gewebe nach Anspruch 1, wobei der hintere Abschnitt (2) des Messers und der Kantenabschnitt (1) des Messers jeweils eine horizontale Länge in einem Bereich von 8 cm bis 20 cm aufweisen.

4. - Messer zum Schneiden von hartem Gewebe nach Anspruch 1, wobei ein Ende des hinteren Abschnitts (2) des Messers, das vom Kantenabschnitt (1) des Messers entfernt ist, eine Dicke in einem Bereich von 4 mm bis 12 mm aufweist.

5. - Messer zum Schneiden von hartem Gewebe nach Anspruch 1, wobei der Kantenabschnitt (1) des Messers eine vertikale Höhe in einem Bereich von 1 mm bis 3,5 mm aufweist.

6. - Messer zum Schneiden von hartem Gewebe nach Anspruch 1, wobei sowohl der hintere Abschnitt (2) des Messers als auch der Kantenabschnitt (1) des Messers aus weißem Stahl hergestellt sind.

## Revendications

1. - Nouveau couteau à trancher des tissus durs, comprenant une partie arrière de couteau (2) et une partie arête coupante (1) qui sont fabriquées d'un seul tenant ; **caractérisé par le fait que** :
la partie arrière de couteau (2) a une section transversale en trapèze isocèle, la partie arête coupante (1) a une section transversale en triangle isocèle ; une extrémité de la partie arrière de couteau (2), qui est à distance de la partie arête coupante (1), a une épaisseur se situant dans une plage allant de 4 mm à 15 mm ;
une jonction entre la partie arrière de couteau (2) et la partie arête coupante (1) a une épaisseur se situant dans une plage allant de 0,1 mm à 0,8 mm ;
la partie arrière de couteau (2) a une hauteur verticale se situant dans une plage allant de 27 mm à 38 mm ;
deux faces de la partie arête coupante (1) forme un angle se situant dans une plage allant de 10 degrés à 40 degrés ; et
un angle de base du triangle isocèle se situe dans une plage allant de 70 degrés à 85 degrés.

2. - Couteau à trancher des tissus durs selon la revendication 1, dans lequel un angle de base inférieur du trapèze isocèle se situe dans une plage allant de 70 degrés à 85 degrés et est supérieur à l'angle de l'angle de base du triangle isocèle.

3. - Couteau à trancher des tissus durs selon la revendication 1, dans lequel la partie arrière de couteau (2) et la partie arête coupante (1) ont chacune une longueur horizontale se situant dans une plage allant de 8 cm à 20 cm.

4. - Couteau à trancher des tissus durs selon la revendication 1, dans lequel une extrémité de la partie arrière de couteau (2), qui est à distance de la partie arête coupante (1), a une épaisseur se situant dans une plage allant de 4 mm à 12 mm.

5. - Couteau à trancher des tissus durs selon la revendication 1, dans lequel la partie arête coupante (1) a une hauteur verticale se situant dans une plage allant de 1 mm à 3,5 mm.

6. - Couteau à trancher des tissus durs selon la revendication 1, dans lequel la partie arrière de couteau (2) et la partie arête coupante (1) sont toutes deux faites d'acier blanc.
